# FASCICULE DE BREVET EUROPEEN

(11) **EP 1 069 302 B1**
(45) Date de publication et mention de la délivrance du brevet: **10.05.2006**
(21) Numéro de dépôt: 00402005.3
(22) Date de dépôt: 12.07.2000
(51) Int. Cl.: F02K 1/00, F02K 1/12, F02K 1/15

(54) **Tuyère d'éjection axisymétrique convergente divergente**
Axialsymmetrische konvergent-divergente Schubdüse
Axisymmetric convergent divergent vectoring nozzle

(30) Priorité: 12.07.1999 FR 9908988
(43) Date de publication de la demande: 17.01.2001
(73) Titulaire: SNECMA, 75015 Paris (FR)
(72) Inventeur: Feder, Didier Georges, 77176 Savigny le Temple (FR); Monville, Bertrand Pierre Renaud, 77550 Moissy Cramayel (FR); Kettler, Daniel, 77590 Chartrettes (FR); Naudet, Jacky Serge, 91070 Bondoufle (FR); Lapergue, Guy Jean-Louis, 77950 Rubelles (FR); Salperwick, Laurent Claude Patrick, 77650 Lizines (FR)

(56) Documents cités:
- EP-A- 0 512 833
- EP-A- 0 687 810
- DE-A- 2 711 936
- US-A- 4 508 270
- US-A- 5 082 182

## Description

L'invention concerne une tuyère d'éjection de turboréacteur, axisymétrique, convergente divergente, comportant une couronne de volets convergents articulés à l'extrémité aval d'une structure annulaire fixe, et une couronne de volets divergents articulés à l'extrémité aval des volets convergents, lesdits volets divergents étant en outre reliés à un anneau de vectorisation actionné par une pluralité de vérins ancrés sur la structure fixe, afin de permettre le réglage de la section de sortie de la partie divergente et la déviation du jet des gaz éjectés par rapport à l'axe du turboréacteur.

Les tuyères d'éjection axisymétrique convergentes divergentes modernes, comportant un dispositif de déviation du jet, permettent d'accroître l'agilité des avions qui en sont équipés, en combat aérien rapproché, de réduire la distance de décollage et la détectabilité radar par suppression ou diminution de la dérive et d'augmenter le rayon d'action de l'avion par réduction de la traînée Les technologies dernièrement utilisées par les motoristes consistent à obtenir la fonction de vectorisation de la poussée au niveau des volets divergents seuls. Ce concept permet des mouvements rapides d'orientation, car l'inertie des masses en mouvement est faible, comparativement à une solution d'orientation de toute la tuyère.

Dans les tuyères orientables de ce type, les volets divergents sont reliés à l'anneau de vectorisation par des volets secondaires froids ou des bielles articulées à l'extrémité aval des volets divergents. Lorsque les déplacements longitudinaux des tiges des vérins se réalisent de manière différente, il se produit un mouvement de bascule du plan de l'anneau de vectorisation par rapport à l'axe du turboréacteur, ce qui entraîne les volets secondaires froids ou les bielles reliées à l'extrémité des volets divergents, ce qui a pour effet d'incliner la veine formée par la pluralité des volets divergents par rapport à l'axe du turboréacteur. Lorsque les déplacements des tiges de vérins sont identiques, l'anneau de vectorisation se déplace en translation, ce qui permet de modifier la section de sortie de la partie divergente de la tuyère.

Pour que l'angle d'inclinaison soit parfaitement maîtrisé, il est nécessaire que l'anneau de vectorisation soit maintenu par rapport à la structure annulaire fixe. De plus, l'inclinaison du vecteur de poussée engendre une répartition différentielle de pression sur la périphérie des volets divergents et sur les volets secondaires froids ou bielles qui relient l'anneau de vectorisation aux volets divergents. Ceci produit des efforts latéraux sur l'anneau de vectorisation relié à la structure annulaire fixe de la tuyère.

Plusieurs solutions sont connues pour maintenir l'anneau de vectorisation sensiblement concentrique à l'axe du turboréacteur et l'empêcher de se déplacer latéralement sous l'action des efforts latéraux exposés ci-dessus.

Dans W0 92/03649, l'anneau de vectorisation comporte trois patins radiaux, dirigés vers l'extérieur et régulièrement espacés de 120° autour de l'axe de l'anneau, qui coulissent dans des glissières axiales espacées de 120° autour de l'axe de la turbomachine et solidaires de la structure fixe, les tiges de vérins étant articulées sur l'extrémité des patins. Ces patins et ces glissières assurent le positionnement de l'anneau de vectorisation et la reprise des efforts latéraux.

Dans US 5 239 815, le positionnement de l'anneau de vectorisation est assuré par une paroi sphérique solidaire de l'anneau de vectorisation en appui contre une paroi extérieure solidaire de la structure fixe, et la reprise des efforts latéraux est assurée par des galets portés par l'anneau et roulant dans des rails reliés à la structure fixe.

US 5 174 502 prévoit de positionner l'anneau de vectorisation et de reprendre les efforts latéraux par des glissières rectangulaires solidaires de la structure fixe et indépendantes des vérins, ces glissières étant reliées à l'anneau de vectorisation par des rotules intégrées à des chapes articulées radialement sur la glissière.

L'invention s'est donné pour but de regrouper sur les vérins les fonctions de commande et de positionnement de l'anneau de vectorisation, ainsi que la reprise des efforts latéraux dus à la vectorisation du jet des gaz d'éjection.

E.P-A-0 687 810 décrit en outre une tuyère dans laquelle les vérins sont reliés à l'anneau de vectorisation par une liaison rotulante et sont fixés sur la structure fixe de manière à reprendre les efforts tangentiels exercés par les gaz d'éjection sur les volets divergents, et à permettre le positionnement de l'anneau de vectorisation.

Selon un premier mode de réalisation de l'invention, le vérin comporte un corps de vérin articulé en amont sur la structure fixe, afin de pouvoir pivoter dans un plan radial, un fourreau relié à l'anneau de vectorisation par la liaison rotulante et susceptible de coulisser sur la surface extérieure du corps de vérin et un piston monté coulissant dans le corps et dont la tige est solidaire du fourreau

De préférence, l'extrémité de la tige de piston est reliée à une paroi verticale du fourreau par une liaison glissante.

De manière avantageuse, le fourreau coulisse entre deux galets reliés à la structure fixe.

Selon un deuxième mode de réalisation de l'invention, le vérin comporte un corps de vérin articulé en amont sur la structure fixe, afin de pouvoir pivoter dans un plan radial, un piston coulissant dans le corps de vérin et une tige de piston dont l'extrémité est reliée à l'anneau de vectorisation par la liaison rotulante.

De manière avantageuse, le corps de vérin coulisse radialement entre deux guides solidaires de la structure fixe.

Selon un troisième mode de réalisation de l'invention, le vérin comporte un corps de vérin fixé sur la structure fixe, un piston coulissant dans le corps de vérin et une tige de piston dont l'extrémité est reliée de manière rotulante à une biellette elle-même articulée radialement à l'anneau de vectorisation.

Selon une variante de réalisation, l'anneau de vectorisation est réalisé en deux parties articulées sur deux charnières diamétralement opposées.

D'autres avantages et caractéristiques de l'invention ressortiront à la lecture de la description suivante faite à titre d'exemple et en référence aux dessins annexés dans lesquels :
la figure 1 est une coupe selon un plan axial vertical d'une tuyère axisymétrique, convergente divergente conforme à l'invention, selon un premier mode de réalisation ;
la figure 2 est une coupe selon un plan axial passant par l'axe d'un vérin de commande de l'anneau de vectorisation de la tuyère de la figure 1;
la figure 3 est semblable à la figure 2 et montre une variante du premier mode de réalisation de l'invention ;
la figure 4 est une vue latérale d'un vérin de commande de l'anneau de vectorisation selon un troisième mode de réalisation de l'invention ;
la figure 5 est une vue radiale du vérin de commande selon le troisième mode de réalisation de l'invention ; et
la figure 6 montre une variante de réalisation de l'invention.

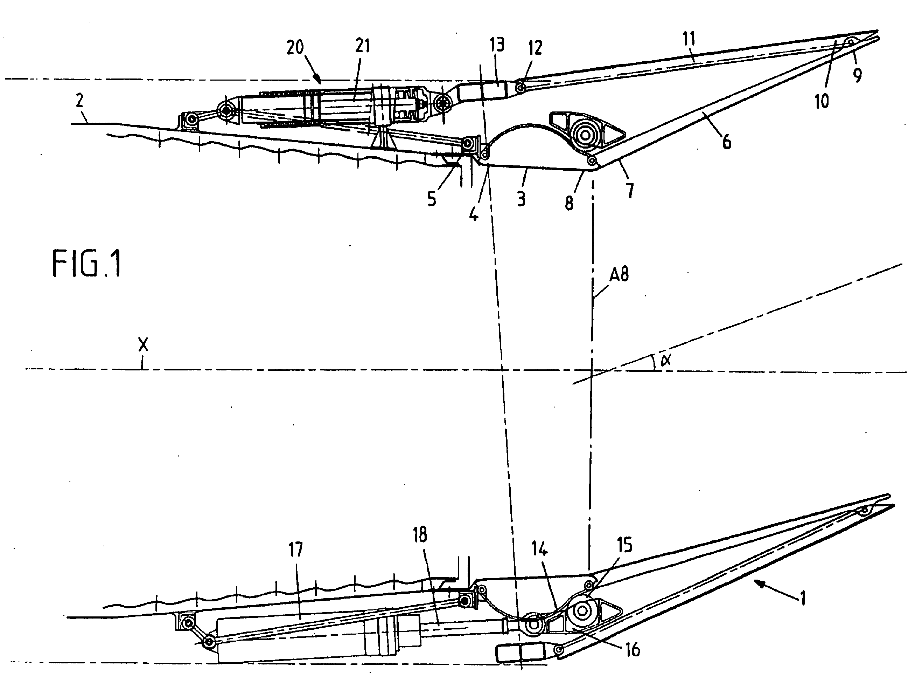

La figure 1 montre une tuyère 1 axisymétrique, convergente divergente qui comporte, en aval d'un carter annulaire 2 d'axe X, une première couronne de volets convergents 3, dont l'extrémité amont 4 est articulée sur l'extrémité aval 5 du carter 2, et en aval de la couronne de volets convergents 3, une deuxième couronne de volets divergents 6, dont l'extrémité amont 7 est articulée sur l'extrémité aval 8 des volets convergents 3. Chaque couronne de volets comporte le même nombre de volets commandés intercalés entre des volets suiveurs.

Les volets divergents 6 sont articulés à leur extrémité aval 9 à l'extrémité aval 10 de bielles 11 dont l'extrémité amont 12 est articulée sur un anneau de vectorisation 13 entourant les volets convergents 3. Les bielles 11 peuvent être remplacées par des volets secondaires froids, ou peuvent supporter des volets froids, disposés dans le prolongement aérodynamique du fuselage de l'avion du turboréacteur équipé de la tuyère 1.

Chaque volet commandé convergent 3 comporte sur sa face externe une came 14 sur laquelle appuie un galet 15 porté par un anneau de commande 16 actionné par une pluralité de vérins 17 ancrés sur la face externe du carter 2. L'anneau de commande 16 peut se déplacer dans l'espace annulaire situé entre les volets convergents 3 et l'anneau de vectorisation 13, parallèlement à l'axe X du carter 2, par le fait que les tiges 18 des vérins 17 sont actionnés en synchronisme.

Le déplacement axial de l'anneau de commande 16 entraîne la modification de la section circulaire A8 de la sortie de la partie convergente de la tuyère 1.

L'anneau de vectorisation 13 est actionné par une pluralité de vérins de commande 20 ancrés en amont sur la face extérieure du carter 2. Ces vérins de commande 20, au nombre de 3 par exemple, sont répartis autour du carter 2 et espacés de 120°. Lorsque les tiges 21 des vérins 20 sont sortis de la même longueur, l'anneau de vectorisation 13 est disposé dans un plan perpendiculaire à l'axe X. Mais, lorsque les tiges 21 des vérins 20 sont déplacés de manière différente, il se produit un mouvement de bascule de l'anneau de vectorisation 13, qui entraîne les bielles 11 reliées à l'extrémité des volets divergents 6, ce qui a pour effet d'incliner la veine des gaz d'éjection, formée par les volets divergents, d'un angle α par rapport à l'axe X, ainsi que cela est montré sur la figure 1. L'inclinaison du vecteur de poussée engendre une pression différentielle sur la périphérie des volets convergents 6 et sur les bielles 11. Ceci produit des efforts latéraux sur l'anneau de synchronisation 13.

Selon la présente invention, les vérins 20 reprennent les efforts tangentiels de la vectorisation.

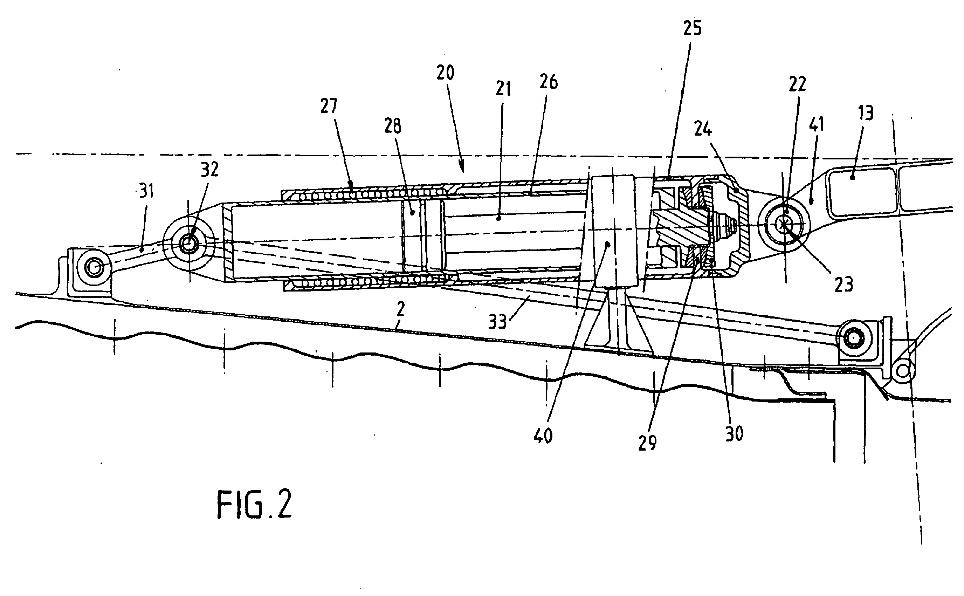

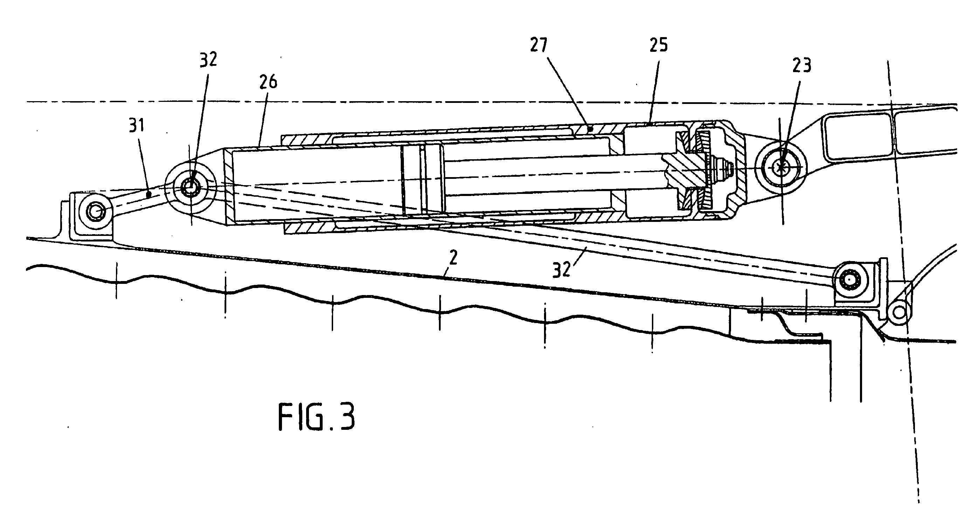

A cet effet, selon un premier mode de réalisation de l'invention, montré sur les figures 1, 2 et 3, le vérin 20 se présente sous la forme d'un vérin palier relié à l'anneau de vectorisation 13 au moyen d'une articulation rotulante 22 ayant pour centre le point 23. L'articulation rotulante 22 permet une rotation dans toutes les directions de l'anneau de vectorisation 13 autour du point 23. L'articulation rotulante 22 est solidaire de la paroi d'extrémité 24 d'un fourreau 25 qui coulisse axialement sur la surface extérieure du corps 26 du vérin 20. Ce coulissement est obtenu par des moyens appropriés 27, soit par une glissière à billes, ainsi que cela est montré sur la figure 2, soit par un système classique de paliers, semblable à ce qui est représenté sur la figure 3.

Un piston 28 est monté coulissant dans le corps de vérin 26. Ce piston 28 est solidaire de la tige de piston 21. Cette dernière est solidarisée au fourreau 25 sur une paroi verticale 29 de celui-ci, située au voisinage de la paroi d'extrémité 24. Pour éviter d'exercer un effort de flexion sur l'extrémité de la tige 21 par l'intermédiaire de la paroi 29 du fourreau 25, lors de la reprise des efforts tangentiels de vectorisation introduits au point 23, la liaison de l'extrémité de la tige 21 avec la paroi 29 est glissante sur ses deux faces et rotulante au moyen d'un ensemble de rondelles à portée sphérique 30. L'extrémité amont du corps de vérin 26 est reliée à un élément structural 31 solidaire du carter 2 au moyen d'une articulation 32 en forme de chape articulée radialement. La référence 33 représente un tirant reliant l'articulation 32 à une structure fixe de la partie aval du carter 2, et destiné à reprendre au moins une partie des efforts axiaux exercés par la tige de vérin 21.

Le vérin 20 peut ainsi pivoter dans un plan radial passant par l'axe X, en fonction du positionnement de l'anneau de vectorisation 13.

Grâce à la structure du vérin 20 décrite ci-dessus, la tige de piston 21 ne supporte que des efforts axiaux, tandis que les efforts tangentiels de la vectorisation sont repris par le fourreau 25, le corps de vérin 26 et l'élément structural 31.

Pour diminuer l'effort encaissé par l'élément structural 31, le fourreau 25 coulisse radialement entre deux galets 40 reliés au carter 2. Ces galets empêchent la rotation tangentielle du vérin 20. Le couple tangentiel de vectorisation agissant sur l'ensemble du vérin palier 20, provenant du point 23, est équilibré entre les galets 40 et le point d'articulation 32 du corps de vérin 26 avec l'élément structural 31.

Le fonctionnement de la commande de vectorisation est décrit ci-après.

Pour obtenir l'orientation du vecteur de poussée de la tuyère 1, les vérins de commande 20 de l'anneau de vectorisation 13 sont pilotés chacun de manière indépendante.

Le piston 28 coulisse axialement dans le corps de vérin 26 entraînant la tige 21. Celle-ci tire ou pousse la paroi 29 par l'intermédiaire des rondelles sphériques 30. La paroi 29 entraîne le fourreau 25 qui coulisse dans la glissière à billes 27 ou les paliers, et positionne ainsi les points rotulants 22 à l'emplacement nécessaire pour situer l'anneau de vectorisation 13 de manière à positionner les volets divergents 6 et orienter la direction de l'éjection de la tuyère 1 par l'intermédiaire des bielles 11 ou des volets secondaires froids.

Lors de ce mouvement, les chapes de liaison 41 des articulations rotulantes 22 à l'anneau de vectorisation 13 pivotent de manière rotulante autour du point 23. L'ensemble du vérin palier 20 pivote radialement autour de l'articulation 32, et le fourreau 25 coulisse entre les deux galets 40.

Les efforts aérodynamiques provoqués sur les volets divergents 6 par la vectorisation transitent vers l'anneau de vectorisation 13 par l'intermédiaire des bielles 11 ou des volets secondaires froids qui exercent sur cet anneau de vectorisation 13 un effort axial et un effort radial.

L'effort axial est équilibré par les pistons 28 qui reçoivent le fluide de commande. L'effort latéral est transmis aux vérins palier 20 tangentiellement par les points rotulants 23.

La figure 3 montre une variante de réalisation qui diffère du mode de réalisation montré sur la figure 2, par l'absence des paliers de guidage 40. Dans ce cas, l'intégralité de l'effort tangentiel introduit au point 23 transite en flexion dans l'ensemble du vérin palier 20 jusqu'à l'articulation 32 sur l'élément structural 31.

Selon un deuxième mode de réalisation de l'invention, non montré sur les dessins, les efforts tangentiels de vectorisation en flexion sont repris par les tiges de vérin 21. Dans ce cas, le fourreau 25 est supprimé, et le point rotulant 23 est situé à l'extrémité aval de la tige de piston 21.

Le guidage de la tige 21 est alors assuré par le corps de vérin 26. Les galets 40 peuvent dans ce cas être remplacés par deux guides solidaires du carter 2 et entre lesquels le corps de piston 26 peut coulisser radialement. Dans ce deuxième mode de réalisation, le corps de piston 26 est également monté sur un élément structural 31 de manière à pivoter radialement autour d'une articulation 32. Un tirant 33 est également prévu entre l'articulation 33 et l'extrémité aval du carter 2.

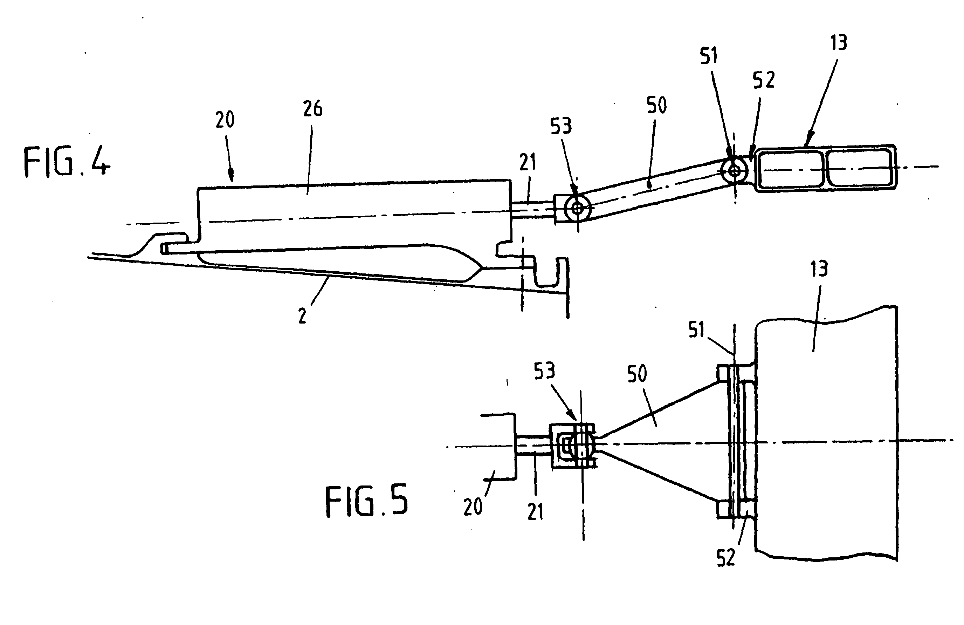

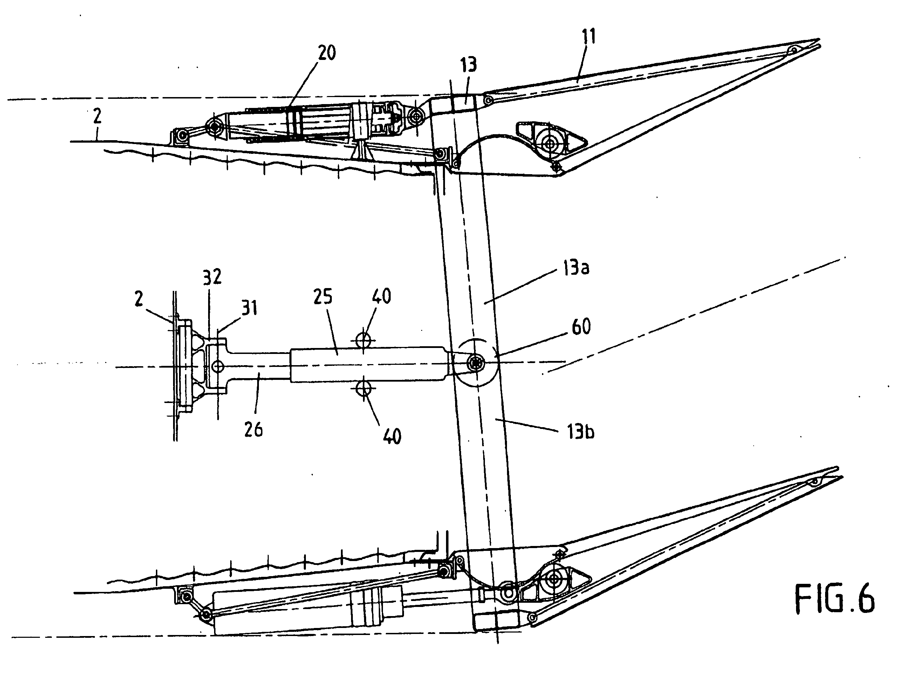

Les figures 4 et 5 montrent un troisième mode de réalisation de l'invention. Ici le corps de vérin 26 du vérin 20 est fixe par rapport au carter 2. Pour permettre les mouvements radiaux de l'anneau de vectorisation 13, ce dernier est relié à l'extrémité de la tige 21 du vérin 20 par une biellette 50 articulée radialement au point 51 sur une chape 52 solidaire de l'anneau de vectorisation 13, et articulée de manière rotulante à l'extrémité de la tige de piston 21 au point 53.

Une variante possible de ce troisième mode de réalisation serait de placer le point rotulant 53 entre la biellette 50 et l'anneau de vectorisation 13 et la chape d'articulation radiale à la liaison entre la tige de vérin 21 et la biellette 50.

La figure 6 montre une variante qui peut s'appliquer aux trois modes de réalisation de l'invention décrits ci-dessus. Cette variante permet d'obtenir un second degré de liberté au niveau du réglage de la section formée par le bord de fuite des volets divergents 6.

Ici, l'anneau de vectorisation 13, auto-porté par les vérins 20, est réalisé en deux parties 13a, 13b articulées sur deux charnières 60 diamétralement opposées. Les charnières 60 peuvent regrouper les points rotulants 23 sous la forme d'un joint universel.

L'anneau de vectorisation 13, en deux parties, est maintenu et actionné par les mêmes vérins 20 que ceux décrits précédemment. Leur nombre et leur disposition sont déterminés pour assurer la stabilité du dispositif. Lors des mouvements de vectorisation, la course des tiges 21 des vérins 20 est pilotée pour articuler les parties 13a et 13b de manière à déformer, par l'intermédiaire des bielles 11, la surface déterminée par le bord de fuite des volets divergents6, pour ajuster la section de sortie à chaque point de vol, afin de conserver les performances de la tuyère 1, lorsque celle-ci est orientée.

## Revendications

1. Tuyère d'éjection de turboréacteur, axisymétrique, convergente divergente, comportant une couronne de volets convergents (3) articulés à l'extrémité aval (5) d'une structure annulaire fixe (2), et une couronne de volets divergents (6) articulés à l'extrémité aval (8) des volets convergents (3), lesdits volets divergents (6) étant en outre reliés à un anneau de vectorisation (13) actionné par une pluralité de vérins (20) ancrés sur la structure fixe (2), afin de permettre le réglage de la section de sortie de la partie divergente et la déviation du jet des gaz éjectés par rapport à l'axe X du turboréacteur, les vérins (20) étant reliés à l'anneau de vectorisation (13) par une liaison rotulante (22), dans laquelle chaque vérin (20) est fixé sur la structure fixe (2) par l'intermédiaire d'un élément structural (31) et d'une articulation (32) et comporte un fourreau (25) de reprise des efforts tangentiels susceptible de coulisser sur la surface externe du vérin (20).

2. Tuyère selon la revendication 1, **caractérisée par le fait que** le vérin (20) comporte un corps de vérin (26) articulé en amont sur la structure fixe (2) afin de pouvoir pivoter dans un plan radial, le fourreau (25) susceptible de coulisser sur la surface extérieure du corps de vérin (26) étant relié à l'anneau de vectorisation (13) par la liaison rotulante (22), et un piston (28) monté coulissant dans le corps (26) et dont la tige (21) est solidaire du fourreau (25).

3. Tuyère selon la revendication 2, **caractérisée par le fait que** l'extrémité de la tige de piston (21) est reliée à une paroi verticale (29) du fourreau (25) par une liaison glissante (30).

4. Tuyère selon l'une quelconque des revendications précédentes, **caractérisée par le fait que** le fourreau (25) coulisse entre deux galets (40) reliés à la structure fixe (2).

5. Tuyère selon l'une quelconque des revendications précédentes, **caractérisée par le fait que** l'anneau de vectorisation (13) est réalisé en deux parties (13a, 13b) articulées sur deux charnières (60) diamétralement opposées.

## Patentansprüche

1. Axialsymmetrische konvergent-divergente Schubdüse für TL-Triebwerke, die einen Kranz konvergenter Klappen (3) aufweist, die am hinteren Ende (5) eines ringförmigen festen Aufbaus (2) angelenkt sind, und einen Kranz divergenter Klappen (6) aufweist, die am hinteren Ende (8) der konvergenten Klappen (3) angelenkt sind, wobei diese divergenten Klappen (6) ferner mit einem Vektorisierungsring (13) verbunden sind, der durch eine Vielzahl von an dem festen Aufbau (2) verankerten Zylindern (20) gesteuert wird, um die Regelung des Austrittsquerschnitts des divergenten Teils und die Umlenkung des Schubgasstrahls bezogen auf die Achse des TL-Triebwerks zu ermöglichen, wobei die Zylinder (20) durch eine Kugelgelenkverbindung (22) mit dem Vektorisierungsring (13) verbunden sind, wobei jeder Zylinder (20) an dem festen Aufbau (2) über ein Aufbauelemmt (31) und ein Gelenk (32) verbunden ist und eine Gleithülse (25) zur Aufnahme der tangentialen Kräfte aufweist, die geeignet ist, auf der Außenfläche des Zylinders (20) zu gleiten.

2. Schubdüse nach Anspruch 1,
**dadurch gekennzeichnet,**
**dass** der Zylinder (20) einen Zylinderkörper (26), der vom an dem festen Aufbau (2) angelenkt ist, um in einer radialen Ebene schwenken zu können, die Gleithülse (25), die geeignet ist, auf der Außenfläche des Zylinderkörpers (26) zu gleiten, und mit dem Vektorisierungsring (13) durch die Kugelgelenkverbindung (22) verbunden ist, sowie einen Kolben (28), der gleitend in dem Körper (26) eingesetzt ist und dessen Stange (21) fest mit der Gleithülse (25) verbunden ist, aufweist.

3. Schubdüse nach Anspruch 2,
**dadurch gekennzeichnet,**
**dass** das Ende der Kolbenstange (21) durch eine Gleitverbindung (30) mit einer vertikalen Wand (29) der Gleithülse (25) verbunden ist.

4. Schubdüse nach einem der vorherigen Ansprüche,
**dadurch gekennzeichnet,**
**dass** die Gleithülse (25) zwischen zwei mit dem festen Aufbau (2) verbundenen Rollen (40) gleitet.

5. Schubdüse nach einem der vorherigen Ansprüche,
**dadurch gekennzeichnet,**
**dass** der Vektorisierungsring (13) aus zwei Teilen (13a, 13b) besteht, die an zwei diametral gegenüberliegenden Scharnieren (60) angelenkt sind.

## Claims

1. Axisymmetric convergent-divergent turbojet exhaust nozzle comprising a ring of converging flaps (3) articulated at the downstream end (5) of a fixed annular structure (2), and a ring of diverging flaps (6) articulated at the downstream end (8) of the converging flaps (3), the said diverging flaps (6) additionally being connected to a vectoring ring (13) driven by a plurality of actuators (20) anchored on the fixed structure (2) so as to allow adjustment of the outlet cross section of the diverging part and deflection of the jet of expelled gases with respect to the axis X of the turbojet, the actuators (20) being connected to the vectoring ring (13) by a ball joint (22), in which nozzle each actuator (20) is fastened to the fixed structure (2) by way of a structural element (31) and of an articulation (32) and comprises a sleeve (25) which takes up tangential forces and which can slide on the external surface of the actuator (20).

2. Nozzle according to Claim 1, **characterized in that** the actuator (20) comprises an actuator body (26) articulated upstream on the fixed structure (2) so as to be able to pivot in a radial plane, the sleeve (25) which can slide on the outer surface of the actuator body (26) being connected to the vectoring ring (13) by the ball joint (22), and a piston (28) which is slidably mounted in the body (26) and whose rod (21) is fixed to the sleeve (25).

3. Nozzle according to Claim 2, **characterized in that** the end of the piston rod (21) is connected to a vertical wall (29) of the sleeve (25) by a sliding joint (30).

4. Nozzle according to any one of the preceding claims, **characterized in that** the sleeve (25) slides between two rollers (40) connected to the fixed structure (2).

5. Nozzle according to any one of the preceding claims, **characterized in that** the vectoring ring (13) is made in two parts (13a, 13b) articulated on two diametrically opposed hinges (60).
